# EUROPEAN PATENT SPECIFICATION

(11) **EP 1 919 240 B1**
(45) Date of publication and mention of the grant of the patent: **20.02.2013**
(21) Application number: 07013478.8
(22) Date of filing: 10.07.2007
(51) Int. Cl.: H04W 68/12, H04L 12/12, H04W 52/02, H04W 88/06

(54) **System and method for managing power of DBDM terminal**
System und Verfahren zum Verwalten der Leistung eines DBDM-Endgeräts
Système et procédé de gestion d'alimentation de terminal DBDM

(30) Priority: 31.10.2006 KR 20060106501
(43) Date of publication of application: 07.05.2008
(73) Proprietor: Samsung Electronics Co., Ltd., Suwon-si, Gyeonggi-do, 443-742 (KR)
(72) Inventor: Lee, Yong Bok, Suwon-si Gyeonggi-do (KR)
(74) Representative: Harrison Goddard Foote

(56) References cited:
- WO-A-2006/049422
- US-A- 5 369 798
- US-A1- 2004 002 330
- US-A1- 2006 128 350
- US-B1- 6 625 451

## Description

### BACKGROUND OF THE INVENTION

### 1. Field of the Invention

The present invention generally relates to a Dual Band Dual Mode (DBDM) terminal and, more particularly, to a method and a system for extending the battery life of a DBDM terminal using mobile communication and portable Internet services.

### 2. Description of the Related Art

Recently, a hot spot service is provided via a public wireless Local Area Network (LAN) to enable high-speed Internet access from public places by using laptop computers, for example. Such an Internet access service based on the public wireless LAN provides almost the same quality as in wired environments at a lower cost. However, this type of service has a problem of narrow coverage and poor mobility. As a result, there are limitations in providing a reliable and faultless service outdoors. In an attempt to solve the problem of such wireless LAN systems, a Wireless Broadband (WiBro) service named Portable Internet has been developed as a wireless Internet service for providing users on the move, as well as those remaining still, with high-speed Internet access with high service quality at a low cost. More particularly, a WiBro service refers to a service for enabling moving users, as well as stationary users, to wirelessly access Internet at a high speed regardless of time and place.

However, when a conventional DBDM portable terminal having functional modules adapted for the Portable Internet service and a conventional mobile communication service, respectively, is used for the portable Internet service, power is still supplied to the functional module adapted for the mobile communication service. This increases power consumption and shortens the battery life.

US2006/0128350 discloses methods and apparatus to operate transceiver systems of a wireless platform in which a plurality of transceiver systems include a host transceiver system and one or more client transceiver systems. To reduce power consumption the client transceiver systems may be disabled from receiving incoming communication.

US2004/0002330 discloses a method and system for co-ordinating services in integrated WLAN-cellular systems. User traffic and signaling/control data are routed in wireless systems having an integrated wireless local area network and cellular network. The signaling/control data may include an alert of an incoming mobile terminated session that is transmitted to the user equipment based on the type of user equipment and the level of integration.

### SUMMARY OF THE INVENTION

The present invention addresses at least the above-described problems and/or disadvantages, and provides a system and a method for lengthening the battery life of a DBDM terminal by limiting power supply to an idle module.

In accordance with an aspect of the present invention, there is provided a system for managing power of a portable terminal for using a mobile communication service and a portable Internet service, the system comprising a portable terminal, a portable Internet base station, and a mobile communication base station: the portable terminal having a mobile communication unit and a portable Internet unit for using a mobile communication service and a portable Internet service, respectively; wherein the portable terminal is configured to allow a user to preset a power saving mode and to check the power saving mode preset by the user when the portable Internet service is requested; wherein, if the preset power saving mode is a phone on/off mode, the portable terminal is further configured to transmit phone information, including information indicating that the portable terminal is in the on/off mode, to the portable Internet base station and the mobile communication base station, to interrupt power supply to the mobile communication unit during the time that the portable Internet service is used before receiving a call connection request from the mobile communication base station via the portable Internet base station, and to resume power supply to the mobile communication unit when the portable terminal receives a call connection request from the mobile communication base station via the portable Internet base station; the phone on/off mode thus being a mode in which no power is supplied to the mobile communication unit while the portable terminal is providing the portable Internet service but in which power supply to the mobile communication unit is resumed when a call connection request is received from the mobile communication base station via the portable Internet base station; wherein, if the preset power saving mode is a phone off mode, the portable terminal is further configured to interrupt power supply to the mobile communication unit during the time that the portable Internet service is used, and to resume power supply to the mobile communication unit when the portable Internet service is terminated; the phone off mode thus being a mode in which no power is supplied to the mobile communication unit while the portable Internet service is provided and in which power supply to the mobile communication unit is resumed after the portable Internet service is terminated; wherein the portable Internet base station is configured to receive the phone information from the portable terminal, to store the phone information, to transmit the stored phone information to the mobile communication base station, and to transmit a call connection request received from the mobile communication base station to the portable terminal; and wherein the mobile communication base station is configured to receive the phone information from the portable Internet base station and the portable terminal, to store the phone information, to receive a call connection request from a different portable terminal, and to transmit the received call connection request to the portable Internet base station based on the phone information received from the portable terminal and the portable Internet base station.

In accordance with another aspect of the present invention, there is provided an apparatus for managing power of a portable terminal for using a mobile communication service and a portable Internet service by communicating with a mobile communication base station and a portable Internet base station respectively, the apparatus comprising: a mobile communication unit for transmitting/receiving a mobile communication signal according to a protocol defined by a mobile communication service specification with the mobile communication base station; a portable Internet unit for transmitting/receiving a portable Internet signal according to a protocol defined by a portable Internet service specification with the portable Internet base station; and a control unit, for checking a power saving mode preset by a user when the portable Internet service is requested; wherein, if the preset power saving mode is a phone on/off mode, the control unit is further configured to cause the mobile communication unit to transmit phone information, including information indicating that the preset power saving mode is the on/off mode, to the mobile communication base station, to cause the portable Internet unit to transmit the phone information to the portable Internet base station, to interrupt power supply to the mobile communication unit during the time that the portable Internet service is used before receiving a call connection request from the mobile communication base station via the portable Internet base station, and to resume power supply to the mobile communication unit when the portable terminal receives a call connection request from the mobile communication base station via the portable Internet base station; the phone on/off mode thus being a mode in which no power is supplied to the mobile communication unit while the portable terminal is providing the portable Internet service but in which power supply to the mobile communication unit is resumed when a call connection request is received from the mobile communication base station via the portable Internet base station; wherein, if the preset power saving mode is a phone off mode, the control unit is further configured to interrupt power supply to the mobile communication unit during the time that the portable Internet service is used, and to resume power supply to the mobile communication unit when the portable Internet service is terminated; the phone off mode thus being a mode in which no power is supplied to the mobile communication unit while the portable Internet service is provided and in which power supply to the mobile communication unit is resumed after the portable Internet service is terminated.

In accordance with another aspect of the present invention, there is provided a method for managing power of a portable terminal for using a mobile communication service and a portable Internet service by communicating with a mobile communication base station and a portable Internet base station respectively, the method comprising the steps of: presetting, by a user, a power saving mode; monitoring whether a portable Internet service is requested; checking the power saving mode preset by the user when the portable Internet service is requested; wherein, if the preset power saving mode is a phone on/off mode, the method comprises the further steps of: transmitting phone information, including information indicating that the portable terminal in the on/off mode, to the mobile communication base station and the portable Internet base station; and interrupting power supply to a mobile communication unit of the portable terminal during the time that the portable Internet service is used before receiving a call connection request from the mobile communication base station via the portable Internet base station; the phone on/off mode thus being a mode in which no power is supplied to the mobile communication unit while the portable terminal is providing the portable Internet service but in which power supply to the mobile communication unit is resumed when a call connection request is received from the mobile communication base station via the portable Internet base station; wherein, if the preset power saving mode is a phone off mode, the method comprises the further steps of: interrupting power supply to the mobile communication unit of the portable terminal during the time that the portable Internet service is used; and resuming power supply to the mobile communication unit when the portable Internet service is terminated; the phone off mode thus being a mode in which no power is supplied to the mobile communication unit while the portable Internet service is provided and in which power supply to the mobile communication unit is resumed after the portable Internet service is terminated.

### BRIEF DESCRIPTION OF THE DRAWINGS

The above and other objects, features and advantages of the present invention will be more apparent from the following detailed description in conjunction with the accompanying drawings, in which:
FIG. 1 is a block diagram of a portable terminal according to the present invention;
FIG. 2 shows a screen for setting up the condition of a portable terminal according to the present invention;
FIGs. 3a and 3b show the operation of an apparatus for saving the power of a portable terminal according to the present invention; and
FIG. 4 shows the operation of a portable terminal, a portable Internet base station, and a mobile communication base station according to the present invention.

### DETAILED DESCRIPTION OF THE PREFERRED EMBODIMENTS

Preferred embodiments of the present invention are described below with reference to the accompanying drawings. The same reference symbols identify the same or corresponding elements in the drawings. Descriptions of constructions or processes known in the art may be omitted to avoid obscuring the invention in unnecessary detail.

It will be assumed in the following description of the present invention that a portable terminal refers to a Dual Band Dual Mode (DBDM) portable terminal adapted for both a mobile communication service and a portable Internet service, such as a mobile communication terminal, a digital broadcasting terminal, a Personal Digital Assistant (PDA), a smart phone, an International Mobile Telecommunication 2000 (IMT-2000) terminal, a Wideband Code Division Multiple Access (WCDMA) terminal, a Universal Mobile Telecommunication Service (UMTS) terminal, or a Global System for Mobile Communications (GSM) Terminal. In other words, the present invention is applicable to any type of portable terminal (e.g. information communication device, multimedia device, etc.), which has functional modules adapted for a mobile communication service and a portable Internet service, respectively.

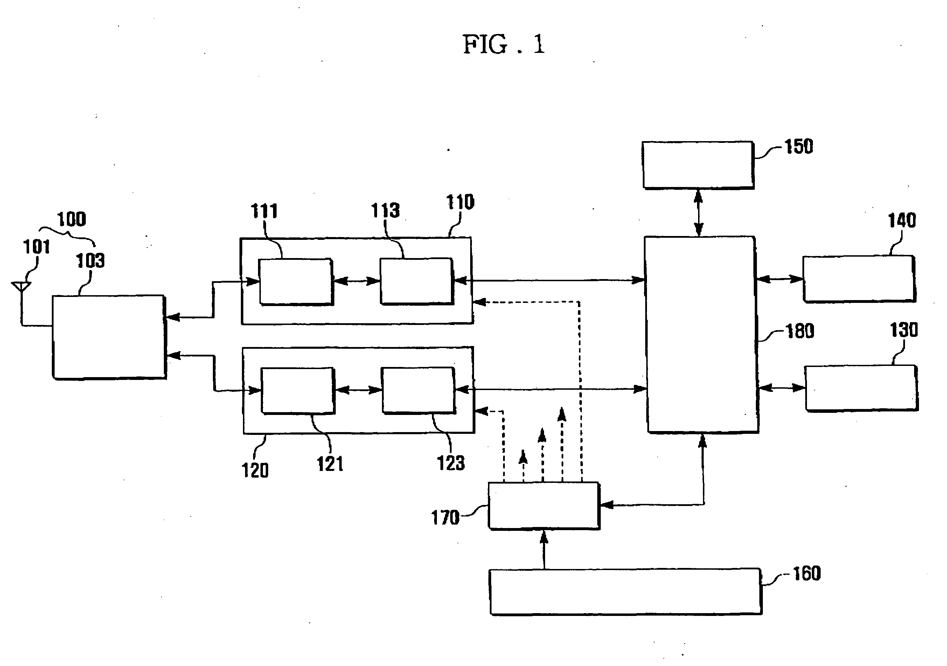

FIG. 1 shows a portable terminal according to the present invention. The portable terminal in FIG. 1 includes an antenna unit 100, a mobile communication unit 110, a portable Internet unit 120, a storage unit 130, an input unit 140, a display unit 150, a battery unit 160, a power supply unit 170, and a control unit 180.

The antenna unit 100 includes a Radio Frequency (RF) antenna 101 and an antenna filter 103. The RF antenna 101 receives RF signals from an adjacent mobile communication and/or portable Internet base stations and transmits them to the antenna filter 103. In addition, the antenna unit 100 receives RF signals from the antenna filter 103 and transmits them. As such, the antenna unit 100 transmits/receives mobile communication signals and/or portable Internet signals. The antenna filter 103 classifies RF signals, which have been received from the RF antenna 101, into mobile communication signals and portable Internet signals according to the frequency, and transmits them to the mobile communication unit 110 and the portable Internet unit 120, respectively. The mobile communication service and the portable Internet service use different frequency bands. For example, CDMA and Wireless Broadband (WiBro) use a frequency band of 800MHz and 2.3GHz, respectively. Considering this, the antenna filter 103 may include a suitable combination of a Band Pass Filter (BPF), a High Pass Filter (HPF), and a Low Pass Filter (LPF). It is also possible to connect diplexers and constitute the antenna filter 203 so two types of signals are separated and used for corresponding functions. Although a single RF antenna 101 is shown in FIG. 1, the number is not limited to that and may vary according to the present invention. For example, the mobile communication unit 110 and the portable Internet unit 120 may have respective RF antennas.

The mobile communication unit 110 includes a mobile communication RF module 111 and a mobile communication modem 113. The mobile communication RF module 111 demodulates mobile communication signals, which have been received from the antenna filter 103, and transmits the demodulated signals to the mobile communication modem 113. In addition, the mobile communication RF module 111 modulates transmission data, which have been received from the mobile communication modem 113, and transmits the modulated signals via the RF antenna 101. The mobile communication modem 113 processes mobile communication signals, which are received from the mobile communication RF module 111, and conducts a call proceeding according to a protocol based on mobile communication specifications.

The portable Internet unit 120 includes a portable Internet RF module 121 and a portable Internet modem 123. The portable Internet RF module 121 demodulates portable Internet signals, which have been received from the antenna filter 103, and transmits the demodulated signals to the portable Internet modem 123. The portable Internet unit 120 modulates transmission data, which has been received from the portable Internet modem 123, and transmits the modulated signals via the RF antenna 101. The portable Internet modem 123 processes portable Internet signals, which are received from the portable Internet RF module 121, and conducts a call proceeding according to a protocol based on portable Internet specifications. When the portable terminal functions in one of a mobile communication mode and a portable Internet mode under the control of the control unit 180 (described later), one of the modems 113 and 123, which processes signals in the corresponding mode, initializes the corresponding network. Then, the corresponding mode is switched to an idle mode. Authentication is conducted with regard to the corresponding network and is followed by a location registration procedure and a procedure for originating/receiving calls, so a service is used in the corresponding mode. The amount of current used in the idle mode is about 50mA. It is meant by the initialization process that information necessary for the terminal is selected and that an environment for shifting to the idle mode is created. The initialization process includes a system determination substate, a pilot channel acquisition substate, and a sync channel acquisition substate in this order. The process for initializing a portable terminal is widely known in the art, and a description thereof will be omitted.

Under the control of the control unit 180, the mobile communication modem 113 and the portable Internet modem 123 function independent of their settings. For example, when the portable terminal is in the mobile communication mode and when the mobile communication modem 113 is in a traffic condition, the portable Internet modem 123 is driven to register the location and set up calls with regard to the portable Internet network.

The storage unit 130 has a program region for storing an Operating System (OS), which incorporates a real-time processing function necessary to operate the portable terminal, and software for processing respective functions incorporated by the portable terminal, as well as a data region for storing information or program parameters resulting from driving of the software. The storage unit 130 is connected to the control unit 180, the mobile communication modem 113, and the portable Internet modem 123, respectively, to store data created by corresponding devices, The storage unit 130 may include a flash memory, which is a nonvolatile memory having a high data processing rate.

The input unit 140 has a key matrix structure to create a key value corresponding to a user input and provide the control unit 180 with the value.

The display unit 150 may include a Liquid Crystal Display (LCD). Under the control of the control unit 180, the display unit 150 provides various Graphical User Interfaces (GUIs) for the user. The display unit 150 may also include a vibration motor and a lamp to inform of an incoming call.

The battery unit 160 acts as the power source of the portable terminal and includes a conventional battery and a battery pack.

The power supply unit 170 supplies respective components of the portable terminal with power outputted by the battery unit. If necessary, the power supply unit 170 may supply a specific component with no power under the control of the controller 180.

The controller 180 controls the overall operation of the portable terminal. In particular, the controller 180 transmits control signals to the mobile communication modem 213 or the portable Internet modem 223 and controls their operation so that, according to the type of received RF signals (mobile communication signals and/or portable Internet signals) and/or the type of calls (incoming calls/originating calls), the portable terminal functions in the mobile communication mode or in the portable Internet mode.

When the portable terminal is powered on, the control unit 180 drives the mobile communication modem 113 and the portable Internet modem 123, respectively, to conduct initialization with regard to the mobile communication network and the portable Internet work. The control unit 180 controls the mobile communication modem 113 and the portable Internet modem 123 in such a manner that they can function independent of the settings of the other modem. Therefore, it is possible to control the portable Internet modem 123 to set up a call to the portable Internet network even when a call originates/arrives in the mobile communication mode. When the portable terminal receives a call, the control unit 180 can control the mobile communication modem 113 and/or the portable Internet modem 123 so the portable terminal functions in a network, which transmits a paging message to the portable terminal, between the mobile communication network and the portable Internet network.

In particular, the control unit 180 controls the power supply unit 170 to interrupt power supply to the mobile communication unit 110 when a portable Internet service is provided according to the present invention. The control unit 180 controls the power supply unit 170 to resume power supply to the mobile communication unit 110 when a call is to be connected for the mobile communication service or when the portable Internet service is to be terminated.

Although FIG. 1 shows the mobile communication RF module 111 and the portable Internet RF module 121 as separate components, as well as the mobile communication modem 113, the portable Internet modem 123, and the control unit 180 as separate components, the present invention is not limited to the construction shown in FIG. 1. For example, the mobile communication RF module 111 and the portable Internet RF module 121 may be implemented as a single RF module chip; and the mobile communication modem 113, the portable Internet modem 123, and the control unit 180 may be implemented as a single chip.

The operation of the portable terminal, which is constructed as mentioned above, will now be described with reference to the accompanying drawings.

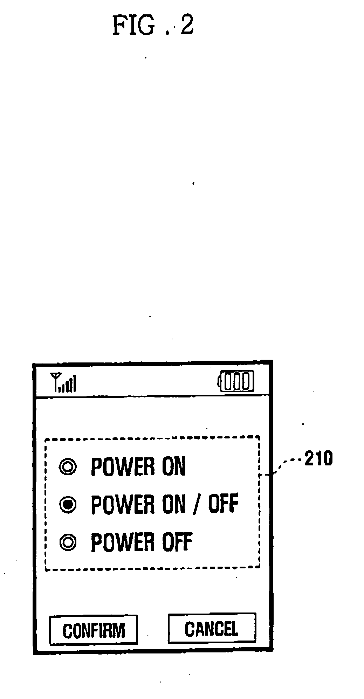

A process for setting up a power saving mode according to the present invention will now be described, FIG. 2 shows a screen for setting up the condition of a portable terminal according to the present invention.

Referring to FIG. 2, the user can set up the power saving mode from the screen example shown in the drawing. The power saving mode includes a PHONE ON mode, a PHONE ON/OFF mode, and a PHONE OFF mode.

In the PHONE ON mode, power is supplied to both the mobile communication unit 110 and the portable Internet unit 120 so the portable terminal uses the portable Internet service, as for a conventional portable terminal.

In the PHONE ON/OFF mode, no power is supplied to the mobile communication unit 110 while the portable terminal is providing the portable Internet service. When a call connection request is received, power supply to the mobile communication unit 110 resumes.

In the PHONE OFF mode, no power is supplied to the mobile communication unit 110 while the portable Internet service is provided. Power supply to the mobile communication unit 110 resumes after the portable Internet service is terminated.

Each mode can be selected by choosing a corresponding one of three radio buttons 210 shown in the screen of FIG. 2 and pressing the confirmation key.

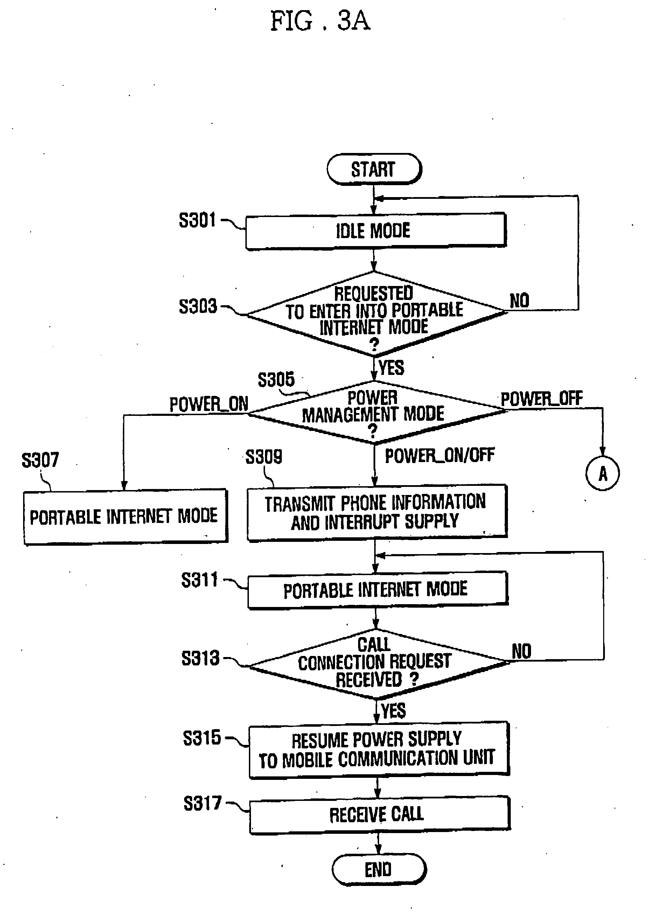

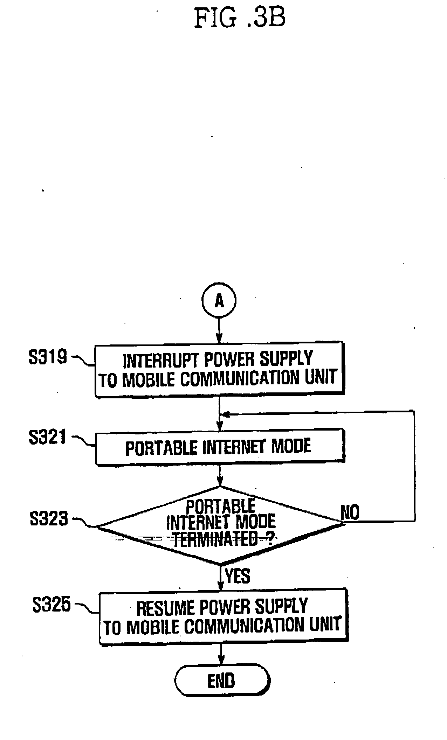

The operation of the portable terminal in each power saving mode will now be described. FIGs. 3A and 3B show the operation of an apparatus for saving the power of a portable terminal according to the present invention.

Referring to FIG. 3A, when the user requests that the portable Internet service be provided while the control unit 180 is in an idle mode in step S301, the control unit 180 detects the request in step S303 and checks the power saving mode in step S305. If it is confirmed as a result of the check that a POWER ON mode has been selected as the power saving mode, the control unit 180 proceeds to S307; in the case of a POWER ON/OFF mode, the control unit 180 proceeds To S309; and, in the case of a POWER OFF mode, the control unit 180 proceeds to step S319 in FIG. 3B. Steps following step S319, which are concerned with operations in the POWER OFF mode, will be described later with reference to FIG. 3B.

After confirming the POWER ON mode, the control unit 180 provides the portable Internet service in step S307, as in the case of a conventional portable terminal. If the POWER ON/OFF mode has been selected, the control unit 180 transmits phone information to the mobile communication base station and the portable Internet base station and interrupts power supply to the mobile communication unit 110 (i.e. powers off the unit 110) in step S309. The phone information includes information necessary to identify the portable terminal and information necessary to identify the base station connected to the portable terminal. Then, the control unit 180 provides the portable Internet service in step S311.

When the portable Internet base station transmits a call connection request, which has been received from the mobile communication base station, while the portable Internet service is provided, the control unit 180 receives the request in step S313 and resumes power supply to the mobile communication unit 110. Then, the control unit 180 connects the call and enters into a speech mode in step S317. As such, power supply to the mobile communication unit 110 is interrupted in the POWER ON/OFF mode, since it is idle in this mode. The power supply resumes only at the call connection request of the mobile communication base station and the portable Internet base station. This reduces power consumption.

The operation of the portable terminal when the POWER OFF mode has been selected as the power saving mode will now be described with reference to FIG. 3B

Referring to FIG. 3B, if it has been confirmed in step S305 that the POWER OFF mode has been selected as the power saving mode, the control unit 180 interrupts power supply to the mobile communication unit 110 in step S319, and provides the portable Internet service in step S321.

When the portable Internet service is terminated, the control unit 180 detects Internet mode termination in step S323, and resumes power supply to the mobile communication unit 110. As such, when the portable Internet service is provided in the POWER OFF mode, power supply to the mobile communication unit 110 is interrupted; and, after the portable Internet service is terminated, power supply resumes. This reduces power consumption when the portable Internet service is provided.

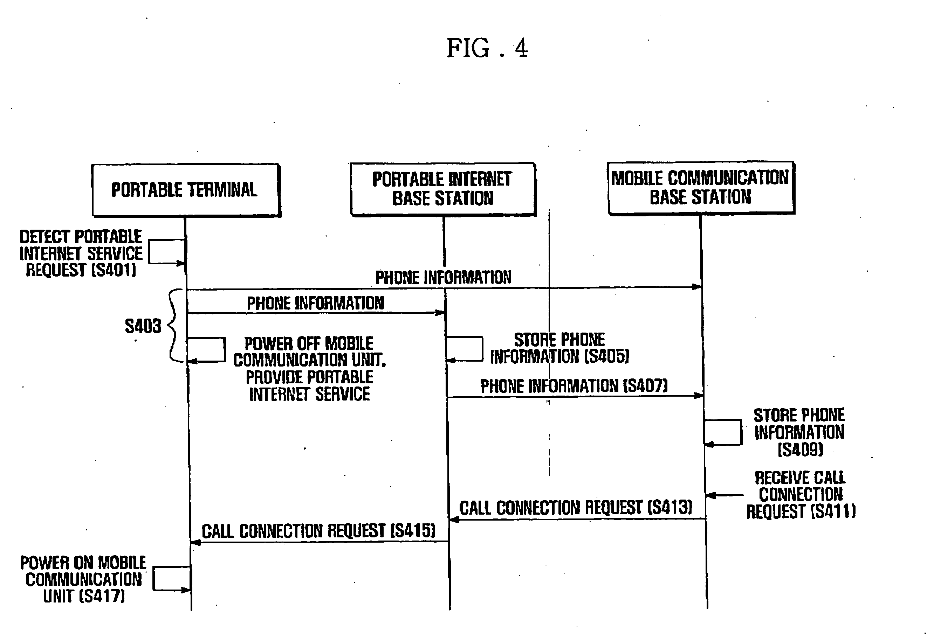

The operation of the portable terminal, the portable Internet base station, and the mobile communication base station according to an embodiment of the present invention will now be described with reference to FIG. 4.

Referring to FIG. 4, if a key input requesting that a portable Internet service be provided is made, the portable terminal detects the request in step S401. The portable terminal transmits phone information to the portable Internet base station and the mobile communication base station and interrupts power supply to the mobile communication unit 110 (i.e. powers off the unit 110) in step S403. The phone information includes information indicating that the portable terminal is in the PHONE ON/OFF mode, as well as information necessary to identify the portable terminal in connection with initialization and call connection when the mobile communication unit is powered off and then powered on. The phone information also includes information necessary to identify the base station connected to the portable terminal.

After receiving the phone information from the portable terminal, the portable Internet base station stores the phone information in step S405, and transmits the phone information to the mobile communication base station to inform that the portable terminal is using the portable Internet base station in step 407.

Upon receiving the phone information from the portable terminal and the portable Internet base station, the mobile communication base station stores the received phone information in step S409. When another portable terminal requests call connection, the mobile communication base station receives the call connection request in step S411, and informs the portable Internet base station of the call connection request in step S413. After receiving the call connection request, the portable Internet base station transmits the call connection request to the portable terminal in step S415. Based on the phone information received from the portable terminal and the portable Internet base station, the mobile communication base station can transmit the call connection request to the portable Internet base station.

After receiving the call connection request from the portable Internet base station, the portable terminal resumes power supply to the mobile communication unit 110 in step S417. Then, the portable terminal turns on the mobile communication unit 110, supplies power to the functional module, and conducts initialization and channel establishment processes, so a mobile communication service is provided.

As apparent from the above description, the present invention is advantageous in that, when the mobile communication service is not provided, power supply to idle components is interrupted. This avoids unnecessary use of the battery and guarantees more efficient use of the portable terminal.

While preferred embodiments of the present invention have been shown and described in this specification, it will be understood by those skilled in the art that various changes or modifications of the embodiments are possible without departing from the scope of the invention as defined by the appended claims.

## Claims

1. A system for managing power of a portable terminal for using a mobile communication service and a portable Internet service, the system comprising a portable terminal, a portable Internet base station, and a mobile communication base station:
- the portable terminal having a mobile communication unit (110) and a portable Internet unit (120) for using a mobile communication service and a portable Internet service, respectively;
wherein the portable terminal is configured to allow a user to preset a power saving mode and to check the power saving mode preset by the user when the portable Internet service is requested (S401);
wherein, if the preset power saving mode is a phone on/off mode, the portable terminal is further configured to transmit phone information, including information indicating that the portable terminal is in the phone on/off mode, to the portable Internet base station and the mobile communication base station (S403), to interrupt power supply (S403) to the mobile communication unit (110) during the time that the portable Internet service is used before receiving a call connection request from the mobile communication base station via the portable Internet base station, and to resume power supply (S417) to the mobile communication unit (110) when the portable terminal receives a call connection request (S415) from the mobile communication base station via the portable Internet base station;
the phone on/off mode thus being a mode in which no power is supplied to the mobile communication unit (110) while the portable terminal is providing the portable Internet service but in which power supply to the mobile communication unit (110) is resumed when a call connection request is received from the mobile communication base station via the portable Internet base station;
wherein, if the preset power saving mode is a phone off mode, the portable terminal is further configured to interrupt power supply to the mobile communication unit (110) during the time that the portable Internet service is used (S319, S321), and to resume power supply (S323, S325) to the mobile communication unit (110) when the portable Internet service is terminated;
the phone off mode thus being a mode in which no power is supplied to the mobile communication unit (110) while the portable Internet service is provided and in which power supply to the mobile communication unit (110) is resumed after the portable Internet service is terminated;
- wherein the portable Internet base station is configured to receive the phone information from the portable terminal (S403), to store the phone information (S405), to transmit the stored phone information to the mobile communication base station (S407), and to transmit a call connection request received from the mobile communication base station to the portable terminal (S415); and
- wherein the mobile communication base station is configured to receive the phone information from the portable Internet base station (S407) and the portable terminal (S403), to store the phone information (S409), to receive a call connection request from a different portable terminal (S411), and to transmit the received call connection request to the portable Internet base station (S413) based on the phone information received from the portable terminal and the portable Internet base station.

2. The system as claimed in claim 1, wherein the phone information comprises information necessary to identify the portable terminal and information necessary to identify a base station connected to the portable terminal.

3. The system as claimed in claim 1, wherein the power saving mode is one of a phone on mode, the phone on/off mode, and the phone off mode, the phone on mode providing power supply to the mobile communication unit (110).

4. An apparatus for managing power of a portable terminal for using a mobile communication service and a portable Internet service by communicating with a mobile communication base station and a portable Internet base station respectively, the apparatus comprising:
- a mobile communication unit (110) for transmitting/receiving a mobile communication signal according to a protocol defined by a mobile communication service specification with the mobile communication base station;
- a portable Internet unit (120) for transmitting/receiving a portable internet signal according to a protocol defined by a portable Internet service specification with the portable Internet base station; and
- a control unit (180), for checking a power saving mode preset by a user when the portable Internet service is requested (S401);
wherein, if the preset power saving mode is a phone on/off mode, the control unit (180) is further configured to cause the mobile communication unit (110) to transmit phone information, including information indicating that the preset power saving mode is the phone on/off mode, to the mobile communication base station (S403), to cause the portable Internet unit (120) to transmit the phone information to the portable Internet base station (S403), to interrupt power supply (S403) to the mobile communication unit (110) during the time that the portable Internet service is used before receiving a call connection request from the mobile communication base station via the portable Internet base station, and to resume power supply (S417) to the mobile communication unit (110) when the portable terminal receives a call connection request (S415) from the mobile communication base station via the portable Internet base station;
the phone on/off mode thus being a mode in which no power is supplied to the mobile communication unit (110) while the portable terminal is providing the portable Internet service but in which power supply to the mobile communication unit (110) is resumed when a call connection request is received from the mobile communication base station via the portable Internet base station;
wherein, if the preset power saving mode is a phone off mode, the control unit (180) is further configured to interrupt power supply to the mobile communication unit (110) during the time that the portable Internet service is used (S319, S321), and to resume power supply (S232, S325) to the mobile communication unit (110) when the portable Internet service is terminated;
the phone off mode thus being a mode in which no power is supplied to the mobile communication unit (110) while the portable Internet service is provided and in which power supply to the mobile communication unit (110) is resumed after the portable Internet service is terminated.

5. The apparatus as claimed in claim 4, wherein the phone information comprises information necessary to identify the portable terminal and information necessary to identify a base station connected to the portable terminal.

6. The apparatus as claimed in claim 4, wherein the power saving mode is one of a phone on mode, the phone on/off mode, and the phone off mode, the phone on mode providing power supply to the mobile communication unit (110).

7. A method for managing power of a portable terminal for using a mobile communication service and a portable Internet service by communicating with a mobile communication base station and a portable Internet base station respectively, the method comprising the steps of:
- presetting, by a user, a power saving mode;
- monitoring whether a portable Internet service is requested;
- checking the power saving mode preset by the user when the portable Internet service is requested (S401);
wherein, if the preset power saving mode is a phone on/off mode, the method comprises the further steps of:
- transmitting phone information, including information indicating that the portable terminal in the phone on/off mode, to the mobile communication base station and the portable Internet base station (S403); and
- interrupting power supply (S403) to a mobile communication unit (110) of the portable terminal during the time that the portable Internet service is used before receiving a call connection request from the mobile communication base station via the portable Internet base station;
the phone on/off mode thus being a mode in which no power is supplied to the mobile communication unit (110) while the portable terminal is providing the portable Internet service but in which power supply to the mobile communication unit (110) is resumed when a call connection request is received from the mobile communication base station via the portable Internet base station;
wherein, if the preset power saving mode is a phone off mode, the method comprises the further steps of:
- interrupting power supply to the mobile communication unit (110) of the portable terminal during the time that the portable Internet service is used (S319, S321); and
- resuming power supply (S323, S325) to the mobile communication unit (110) when the portable Internet service is terminated;
the phone off mode thus being a mode in which no power is supplied to the mobile communication unit (110) while the portable Internet service is provided and in which power supply to the mobile communication unit (110) is resumed after the portable Internet service is terminated.

8. The method as claimed in claim 7, wherein the phone information comprises information necessary to identify the portable terminal and information necessary to identify a base station connected to the portable terminal.

9. The method as claimed in claim 7, wherein the power saving mode is one of a phone on mode, the phone on/off mode, and the phone off mode, the phone on mode providing power supply to the mobile communication unit (110).

## Patentansprüche

1. System zum Verwalten von Leistung eines tragbaren Endgeräts zum Nutzen eines Mobilfunkdienstes und eines tragbaren Internetdienstes, wobei das System ein tragbares Endgerät, eine tragbare Internetbasisstation und eine Mobilfunkbasisstation umfasst:
- wobei das tragbare Endgerät eine Mobilfunkeinheit (110) und eine tragbare Interneteinheit (120) zum Nutzen eines Mobilfunkdienstes bzw. eines tragbaren Internetdienstes hat;
wobei das tragbare Endgerät so konfiguriert ist, dass ein Benutzer einen Stromsparmodus voreinstellen und den vom Benutzer voreingestellten Stromsparmodus prüfen kann, wenn der tragbare Internetdienst angefordert wird (S401);
wobei, wenn der voreingestellte Stromsparmodus ein Telefon-Ein/Aus- Modus ist, das tragbare Endgerät ferner zum Senden von Telefoninformationen, einschließlich Informationen, die anzeigen, dass das tragbare Endgerät im Telefon-Ein/Aus-Modus ist, zur tragbaren Internetbasisstation und zur Mobilfunkbasisstation (S403) konfiguriert ist, um die Stromversorgung (S403) zur Mobilfunkeinheit (110) während der Zeit zu unterbrechen, in der der tragbare Internetdienst genutzt wird, bevor eine Anrufverbindungsanforderung von der Mobilfunkbasisstation über die tragbare Internetbasisstation empfangen wird, und die Stromversorgung (S417) zur Mobilfunkeinheit (110) wieder aufzunehmen, wenn das tragbare Endgerät eine Anrufverbindungsanforderung (S415) von der Mobilfunkbasisstation über die tragbare Internetbasisstation empfängt;
wobei der Telefon-Ein/Aus-Modus ein Modus ist, in dem die Mobilfunkeinheit (110) nicht mit Strom versorgt wird, während das tragbare Endgerät den tragbaren Internetdienst bereitstellt, aber in dem die Stromversorgung zur Mobilfunkeinheit (110) wieder aufgenommen wird, wenn eine Anrufverbindungsanforderung von der Mobilfunkbasisstation über die tragbare Internetbasisstation empfangen wird;
wobei, wenn der voreingestellte Stromsparmodus ein Telefon-Aus-Modus ist, das tragbare Endgerät ferner zum Unterbrechen der Stromversorgung zur Mobilfunkeinheit (110) während der Zeit, in der der tragbare Internetdienst genutzt wird (S319, S321), und zum Wiederherstellen der Stromversorgung (S323, S325) zur Mobilfunkeinheit (110) konfiguriert ist, wenn der tragbare Internetdienst beendet ist;
wobei der Telefon-Aus-Modus somit ein Modus ist, in dem die Mobilfunkeinheit (110) nicht mit Strom versorgt wird, während der tragbare Internetdienst bereitgestellt wird, und in der die Stromversorgung zur Mobilfunkeinheit (110) wieder aufgenommen wird, wenn der tragbare Internetdienst beendet ist;
- wobei die tragbare Internetbasisstation zum Empfangen der Telefoninformationen vom tragbaren Endgerät (S403), zum Speichern der Telefoninformationen (S405), zum Senden der gespeicherten Telefoninformationen zur Mobilfunkbasisstation (S407) und zum Senden einer von der Mobilfunkbasisstation empfangenen Anrufverbindungsanforderung zum tragbaren Endgerät (S415) konfiguriert ist; und
- wobei die Mobilfunkbasisstation zum Empfangen der Telefoninformationen von der tragbaren Internetbasisstation (S407) und dem tragbaren Endgerät (S403), zum Speichern der Telefoninformationen (S409), zum Empfangen einer Anrufverbindungsanforderung von einem anderen tragbaren Endgerät (S411) und zum Senden der empfangenen Anrufverbindungsanforderung zur tragbaren Internetbasisstation (S413) auf der Basis der von dem tragbaren Endgerät und der tragbaren Internetbasisstation empfangenen Telefoninformationen konfiguriert ist.

2. System nach Anspruch 1, wobei die Telefoninformationen zum Identifizieren des tragbaren Endgeräts benötigte Informationen und zum Identifizieren einer mit dem tragbaren Endgerät verbundenen Basisstation benötigte Informationen beinhalten.

3. System nach Anspruch 1, wobei der Stromsparmodus einer aus einem Telefon-Ein-Modus, dem Telefon-Ein/Aus-Modus und dem Telefon-Aus-Modus ist, wobei der Telefon-Ein-Modus die Mobilfunkeinheit (110) mit Strom versorgt.

4. Vorrichtung zum Verwalten von Leistung eines tragbaren Endgeräts zum Nutzen eines Mobilfunkdienstes und eines tragbaren Internetdienstes durch Kommunizieren mit einer Mobilfunkbasisstation bzw. einer tragbaren Internetbasisstation, wobei die Vorrichtung Folgendes umfasst:
- eine Mobilfunkeinheit (110) zum Senden/Empfangen eines Mobilfunksignals gemäß einem durch eine Mobilfunkdienstespezifikation definierten Protokoll zu/von der Mobilfunkbasisstation;
- eine tragbare Interneteinheit (120) zum Senden/Empfangen eines tragbaren Internetsignals gemäß einem durch eine tragbare Internetdienstespezifikation definierten Protokoll zu/von der tragbaren Internetbasisstation; und
- eine Steuereinheit (180) zum Prüfen eines von einem Benutzer voreingestellten Stromsparmodus, wenn der tragbare Internetdienst angefordert wird (S401);
wobei, wenn der voreingestellte Stromsparmodus ein Telefon-Ein/Aus-Modus ist, die Steuereinheit (180) ferner so konfiguriert ist, dass sie bewirkt, dass die Mobilfunkeinheit (110) Telefoninformationen, einschließlich Informationen, die anzeigen, dass der voreingestellte Stromsparmodus der Telefon-Ein/Aus-Modus ist, zur Mobilfunkbasisstation (S403) sendet, um zu bewirken, dass die tragbare Interneteinheit (120) die Telefoninformationen zur tragbaren Internetbasisstation (S403) sendet, um die Stromversorgung (S403) zur Mobilfunkeinheit (110) während der Zeit zu unterbrechen, in der der tragbare Internetdienst genutzt wird, vor dem Empfang einer Anrufverbindungsanforderung von der Mobilfunkbasisstation über die tragbare Internetbasisstation, und um die Stromversorgung (S417) zur Mobilfunkeinheit (110) wiederherzustellen, wenn das tragbare Endgerät eine Anrufverbindungsanforderung (S415) von der Mobilfunkbasisstation über die tragbare Internetbasisstation empfängt;
wobei der Telefon-Ein/Aus-Modus somit ein Modus ist, in dem die Mobilfunkeinheit (110) nicht mit Strom versorgt wird, während das tragbare Endgerät den tragbaren Internetdienst bereitstellt, aber in dem die Stromversorgung zur Mobilfunkeinheit (110) wiederhergestellt wird, wenn eine Anrufverbindungsanforderung von der Mobilfunkbasisstation über die tragbare Internetbasisstation empfangen wird;
wobei, wenn der voreingestellte Stromsparmodus ein Telefon-Aus-Modus ist, die Steuereinheit (180) ferner zum Unterbrechen der Stromversorgung zur Mobilfunkeinheit (110) während der Zeit, in der der tragbare Internetdienst genutzt wird (S319, S321), und zum Wiederherstellen der Stromversorgung (S232, S325) zur Mobilfunkeinheit (110) konfiguriert ist, wenn der tragbare Internetdienst beendet ist;
wobei der Telefon-Aus-Modus somit ein Modus ist, in dem die Mobilfunkeinheit (110) nicht mit Strom versorgt wird, während der tragbare Internetdienst bereitgestellt wird, und in der die Stromversorgung zur Mobilfunkeinheit (110) wieder aufgenommen wird, wenn der tragbare Internetdienst beendet ist.

5. Vorrichtung nach Anspruch 4, wobei die Telefoninformationen zum Identifizieren des tragbaren Endgeräts benötigte Informationen und zum Identifizieren einer mit dem tragbaren Endgerät verbundenen Basisstation benötigte Informationen beinhalten.

6. Vorrichtung nach Anspruch 4, wobei der Stromsparmodus einer aus einem Telefon-Ein-Modus, dem Telefon-Ein/Aus-Modus und dem Telefon-Aus-Modus ist, wobei die Mobilfunkeinheit (110) im Telefon-Ein-Modus mit Strom versorgt wird.

7. Verfahren zum Verwalten von Leistung eines tragbaren Endgeräts zum Nutzen eines Mobilfunkdienstes und eines tragbaren Internetdienstes durch Kommunizieren mit einer Mobilfunkbasisstation bzw. einer tragbaren Internetbasisstation, wobei das Verfahren die folgenden Schritte beinhaltet:
- Voreinstellen eines Stromsparmodus durch einen Benutzer;
- Überwachen, ob ein tragbarer Internetdienst angefordert wird;
- Prüfen des vom Benutzer voreingestellten Stromsparmodus, wenn der tragbare Internetdienst angefordert wird (S401);
wobei, wenn der voreingestellte Stromsparmodus ein Telefon-Ein/Aus-Modus ist, das Verfahren ferner die folgenden Schritte beinhaltet:
- Senden von Telefoninformationen, einschließlich Informationen, die anzeigen, dass das tragbare Endgerät im Telefon-Ein/Aus-Modus ist, zur Mobilfunkbasisstation und zur tragbaren Internetbasisstation (S403); und
- Unterbrechen der Stromversorgung (S403) zu einer Mobilfunkeinheit (110) des tragbaren Endgeräts während der Zeit, in der der tragbare Internetdienst benutzt wird, vor dem Empfangen einer Anrufverbindungsanforderung von der Mobilfunkbasisstation über die tragbare Internetbasisstation;
wobei der Telefon-Ein/Aus-Modus ein Modus ist, in dem die Mobilfunkeinheit (110) nicht mit Strom versorgt wird, während das tragbare Endgerät den tragbaren Internetdienst bereitstellt, aber in dem die Stromversorgung zur Mobilfunkeinheit (110) wiederhergestellt wird, wenn eine Anrufverbindungsanforderung von der Mobilfunkbasisstation über die tragbare Internetbasisstation empfangen wird;
wobei, wenn der voreingestellte Stromsparmodus ein Telefon-Aus-Modus ist, das Verfahren ferner die folgenden Schritte beinhaltet:
- Unterbrechen der Stromversorgung zur Mobilfunkeinheit (110) des tragbaren Endgeräts während der Zeit, in der der tragbare Internetdienst genutzt wird (S319, S321); und
- Wiederherstellen der Stromversorgung (S323, S325) zur Mobilfunkeinheit (110), wenn der tragbare Internetdienst beendet ist;
wobei der Telefon-Aus-Modus somit ein Modus ist, in dem die Mobilfunkeinheit (110) nicht mit Strom versorgt wird, während der tragbare Internetdienst bereitgestellt wird, und in dem die Stromversorgung zur Mobilfunkeinheit (110) wieder aufgenommen wird, wenn der tragbare Internetdienst beendet ist.

8. Verfahren nach Anspruch 7, wobei die Telefoninformationen zum Identifizieren des tragbaren Endgeräts benötigte Informationen und zum Identifizieren einer mit dem tragbaren Endgerät verbundenen Basisstation benötigte Informationen beinhalten.

9. Verfahren nach Anspruch 7, wobei der Stromsparmodus einer aus einem Telefon-Ein-Modus, dem Telefon-Ein/Aus-Modus und dem Telefon-Aus-Modus ist, wobei die Mobilfunkeinheit (110) im Telefon-Ein-Modus mit Strom versorgt wird.

## Revendications

1. Système de gestion de l'alimentation d'un terminal portable pour l'utilisation d'un service de communications mobiles et d'un service Internet portable, le système comprenant un terminal portable, une station de base Internet portable, et une station de base de communications mobiles :
- le terminal portable comportant une unité de communications mobiles (110) et une unité Internet portable (120) en vue de l'utilisation d'un service de communications mobiles et d'un service Internet portable, respectivement ;
cas dans lequel le terminal portable est configuré de façon à permettre à un utilisateur de prérégler un mode Économie d'énergie et à vérifier le mode Économie d'énergie, préréglé par l'utilisateur, lorsque le service Interne portable est demandé (S401);
cas dans lequel, si le mode Économie d'énergie préréglé est un mode téléphone activé/désactivé, le terminal portable est configuré en outre de façon à transmettre des informations relatives au téléphone, englobant des informations qui indiquent que le terminal portable se trouve dans le mode téléphone activé/désactivé, vers la station de base Internet portable et la station de base de communications mobiles (S403), à interrompre l'alimentation en énergie (S403) se rendant à l'unité de communications mobiles (110) pendant la durée au cours de laquelle le service Internet portable est utilisé avant de recevoir une demande de connexion d'appel à partir de la station de base de communications mobiles par l'intermédiaire de la station de base Internet portable, et à reprendre l'alimentation en énergie (S417) vers l'unité de communications mobiles (110) lorsque le terminal portable reçoit une demande de connexion d'appel (S415) à partir de la station de base de communications mobiles par l'intermédiaire de la station de base Internet portable ;
le mode téléphone activé/désactivé étant par conséquent un mode dans lequel aucune énergie n'est fournie à l'unité de communications mobiles (110) pendant que le terminal portable procure le service Internet portable, mais dans lequel l'alimentation en énergie reprend vers l'unité de communications mobiles (110) lorsqu'une demande de connexion d'appel est reçue à partir de la station de base de communications mobiles par l'intermédiaire de la station de base Internet portable ;
cas dans lequel, si le mode Économie d'énergie préréglé est un mode téléphone désactivé, le terminal portable est configuré en outre de façon à interrompre l'alimentation en énergie se rendant à l'unité de communications mobiles (110) pendant la durée au cours de laquelle le service Internet portable est utilisé (S319, S321), et à reprendre l'alimentation en énergie (S323, S325) se rendant à l'unité de communications mobiles (110) lorsque le service Internet portable a pris fin ;
le mode téléphone désactivé étant par conséquent un mode dans lequel aucune énergie n'est fournie à l'unité de communications mobiles (110) pendant que le service Internet portable est assuré, et dans lequel l'alimentation en énergie reprend vers l'unité de communications mobiles (110) après que le service Internet portable a pris fin ;
- cas dans lequel la station de base Internet portable est configurée de façon à recevoir les informations relatives au téléphone à partir du terminal portable (S403), à stocker les informations relatives au téléphone (S405), à transmettre les informations relatives au téléphone stockées à la station de base de communications mobiles (S407), et à transmettre au terminal portable (S415) une demande de connexion d'appel reçue à partir de la station de base de communications mobiles ; et
- cas dans lequel la station de base de communications mobiles est configurée de façon à recevoir les informations relatives au téléphone à partir de la station de base Internet portable (S407) et du terminal portable (S403), à stocker les informations relatives au téléphone (S409), à recevoir une demande de connexion d'appel à partir d'un terminal portable différent (S411), et à transmettre à la station de base Internet portable (S413) la demande de connexion d'appel reçue en fonction des informations relatives au téléphone reçues à partir du terminal portable et de la station de base Internet portable.

2. Système selon la revendication 1, les informations relatives au téléphone comprenant des informations qui sont requises pour identifier le terminal portable et des informations qui sont requises pour identifier une station de base laquelle est connectée au terminal portable.

3. Système selon la revendication 1, le mode Économie d'énergie étant l'un des suivants, à savoir mode téléphone activé, mode téléphone activé/désactivé, et mode téléphone désactivé, alors que le mode téléphone activé procure une alimentation en énergie à l'unité de communications mobiles (110).

4. Appareil de gestion de l'alimentation d'un terminal portable pour l'utilisation d'un service de communications mobiles et d'un service Internet portable, grâce à une communication avec une station de base de communications mobiles et une station de base Internet portable, respectivement, l'appareil comprenant :
- une unité de communications mobiles (110) pour émettre/recevoir un signal de communications mobiles en fonction d'un protocole lequel est défini par une spécification relative à un service de communications mobiles avec la station de base de communications mobiles ;
- une unité Internet portable (120) pour émettre/recevoir un signal Internet portable en fonction d'un protocole lequel est défini par une spécification relative à un service Internet portable avec la station de base Internet portable ; et
- une unité de commande (180) pour vérifier un mode Économie d'énergie préréglé par un utilisateur, lorsque le service Internet portable est demandé (S401) ;
cas dans lequel, si le mode Économie d'énergie préréglé est un mode téléphone activé/désactivé, l'unité de commande (180) est configurée en outre de façon à obliger l'unité de communications mobiles (110) à transmettre des informations relatives au téléphone, englobant des informations qui indiquent que le mode Économie d'énergie préréglé se trouve dans le mode téléphone activé/désactivé, vers la station de base de communications mobiles (S403), à obliger l'unité Internet portable (120) à transmettre les informations relatives au téléphone à la station de base Internet portable (S403), à interrompre l'alimentation en énergie (S403) se rendant à l'unité de communications mobiles (110) pendant la durée au cours de laquelle le service Internet portable est utilisé avant de recevoir une demande de connexion d'appel à partir de la station de base de communications mobiles par l'intermédiaire de la station de base Internet portable, et à reprendre l'alimentation en énergie (S417) vers l'unité de communications mobiles (110) lorsque le terminal portable reçoit une demande de connexion d'appel (S415) à partir de la station de base de communications mobiles par l'intermédiaire de la station de base Internet portable ;
le mode téléphone activé/désactivé étant par conséquent un mode dans lequel aucune énergie n'est fournie à l'unité de communications mobiles (110) pendant que le terminal portable procure le service Internet portable, mais dans lequel l'alimentation en énergie reprend vers l'unité de communications mobiles (110) lorsqu'une demande de connexion d'appel est reçue à partir de la station de base de communications mobiles par l'intermédiaire de la station de base Internet portable ;
cas dans lequel, si le mode Économie d'énergie préréglé est un mode téléphone désactivé, l'unité de commande (180) est configurée en outre de façon à interrompre l'alimentation en énergie se rendant à l'unité de communications mobiles (110) pendant la durée au cours de laquelle le service Internet portable est utilisé (S319, S321), et à reprendre l'alimentation en énergie (S232, S325) se rendant à l'unité de communications mobiles (110) lorsque le service Internet portable a pris fin ;
le mode téléphone désactivé étant par conséquent un mode dans lequel aucune énergie n'est fournie à l'unité de communications mobiles (110) pendant que le service Internet portable est assuré, et dans lequel l'alimentation en énergie reprend vers l'unité de communications mobiles (110) après que le service Internet portable a pris fin.

5. Appareil selon la revendication 4, les informations relatives au téléphone comprenant des informations qui sont requises pour identifier le terminal portable et des informations qui sont requises pour identifier une station de base laquelle est connectée au terminal portable.

6. Appareil selon la revendication 4, le mode Économie d'énergie étant l'un des suivants, à savoir mode téléphone activé, mode téléphone activé/désactivé, et mode téléphone désactivé, alors que le mode téléphone activé procure une alimentation en énergie à l'unité de communications mobiles (110).

7. Procédé de gestion de l'alimentation d'un terminal portable pour l'utilisation d'un service de communications mobiles et d'un service Internet portable, grâce à une communication avec une station de base de communications mobiles et une station de base Internet portable, respectivement, le procédé comprenant les étapes consistant à :
- faire prérégler, par un utilisateur, un mode Économie d'énergie ;
- assurer une surveillance pour savoir si un service Internet portable est demandé, ou non ;
- vérifier le mode Économie d'énergie préréglé par l'utilisateur lorsque le service Internet portable est demandé (S401) ;
cas dans lequel, si le mode Économie d'énergie préréglé est un mode téléphone activé/désactivé, le procédé comprenant les étapes supplémentaires consistant à :
- transmettre des informations relatives au téléphone, englobant des informations qui indiquent que le terminal portable se trouve dans le mode téléphone activé/désactivé, vers la station de base de communications mobiles et la station de base Internet portable (S403) ; et
- interrompre l'alimentation en énergie (S403) se rendant à une unité de communications mobiles (110) du terminal portable pendant la durée au cours de laquelle le service Internet portable est utilisé avant de recevoir une demande de connexion d'appel à partir de la station de base de communications mobiles par l'intermédiaire de la station de base Internet portable ;
le mode téléphone activé/désactivé étant par conséquent un mode dans lequel aucune énergie n'est fournie à l'unité de communications mobiles (110) pendant que le terminal portable procure le service Internet portable, mais dans lequel l'alimentation en énergie reprend vers l'unité de communications mobiles (110) lorsqu'une demande de connexion d'appel est reçue à partir de la station de base de communications mobiles par l'intermédiaire de la station de base Internet portable ;
cas dans lequel, si le mode Économie d'énergie préréglé est un mode téléphone désactivé, le procédé comprenant les étapes supplémentaires consistant à :
- interrompre l'alimentation en énergie se rendant à l'unité de communications mobiles (110) du terminal portable pendant la durée au cours de laquelle le service Internet portable est utilisé (S319, S321) ; et
- reprendre l'alimentation en énergie (S323, S325) se rendant à l'unité de communications mobiles (110) lorsque le service Internet portable a pris fin ;
le mode téléphone désactivé étant par conséquent un mode dans lequel aucune énergie n'est fournie à l'unité de communications mobiles (110) pendant que le service Internet portable est assuré, et dans lequel l'alimentation en énergie reprend vers l'unité de communications mobiles (110) après que le service Internet portable a pris fin.

8. Procédé selon la revendication 7, les informations relatives au téléphone comprenant des informations qui sont requises pour identifier le terminal portable et des informations qui sont requises pour identifier une station de base laquelle est connectée au terminal portable.

9. Procédé selon la revendication 7, le mode Économie d'énergie étant l'un des suivants, à savoir mode téléphone activé, mode téléphone activé/désactivé, et mode téléphone désactivé, alors que le mode téléphone activé procure une alimentation en énergie à l'unité de communications mobiles (110).
